# EUROPÄISCHE PATENTSCHRIFT

(11) **EP 1 760 378 B1**
(45) Veröffentlichungstag und Bekanntmachung des Hinweises auf die Patenterteilung: **02.05.2012**
(21) Anmeldenummer: 06117931.3
(22) Anmeldetag: 27.07.2006
(51) Int. Cl.: F15B 15/10, F15B 21/06, F15B 5/00, G05D 16/06, G05D 16/20, F16K 31/06

(54) **Integrierte Druckwandler-Unterdruck-Stelleinheit**
Vacuum actuator with integrated pressure sensor
Actionneur à depression avec capteur de pression intégré

(30) Priorität: 31.08.2005 DE 102005041211
(43) Veröffentlichungstag der Anmeldung: 07.03.2007
(73) Patentinhaber: ROBERT BOSCH GMBH, 70442 Stuttgart (DE)
(72) Erfinder: Hezel, Bruno, 70565 Stuttgart (DE); Uhlenbrock, Dietmar, 70734 Fellbach (DE)

(56) Entgegenhaltungen:
- EP-A1- 0 581 105
- EP-A2- 0 898 102
- WO-A1-03/087586
- DE-A1- 4 439 667
- US-B1- 6 356 811

## Beschreibung

Die Erfindung bezieht sich auf eine integrierte Druckwandler-Unterdruck-Stelleinheit, insbesondere auf einen integrierten pneumatischen Druckwandler mit einem Unterdrucksteller zum Ansteuern von Stellern an einer Verbrennungskraftmaschine.

### Stand der Technik

Aus DE 103 13 854 A1 ist ein elektropneumatischer Druckwandler mit temperaturkompensiertem Magnetkreis bekannt. Der elektropneumatische Druckwandler umfasst ein Magnetventil, welches eine Magnetspule enthält, die in ein Gehäuse eingelassen ist, sowie einen im Gehäuse verschiebbar geführten Magnetanker. Diesem ist unter Bildung eines Arbeitsluftspaltes ein Magnetkern gegenüberliegend angeordnet, der eine Durchgangsbohrung aufweist, an der Umgebungsdruck anliegt. Das Magnetventil gemäß DE 103 13 854 A1 weist ein Dehnelement auf, welches aus einem sich bei Temperaturänderungen dehnenden Material gefertigt ist und welches den Arbeitsluftspalt zwischen dem Magnetanker und dem Magnetkem begrenzt. Das Dehnelement ist an einer Einspannstelle einseitig im Magnetanker eingespannt und vom Magnetanker umschlossen. Der in DE 103 13 854 A1 offenbarte Magnetanker umfasst ein hülsenförmig ausgebildetes Einsatzteil, in welchem sowohl der Magnetanker als auch der Magnetkern gelagert sind.

Um eine zentrische Führung des Ankers gemäß der Lösung in DE 103 13 854 A1 in dem hülsenförmig gestalteten Führungselement zu erreichen, ist eine in fertigungstechnischer Hinsicht aufwändige Bearbeitung sowohl des Magnetankers, des hülsenförmigen Führungselementes als auch des Magnetkerns erforderlich, da an die Rundheit und die Konzentrizität von Magnetanker und hülsenförmigem Führungselement hohe Anforderungen gestellt sind, um eine leichtgängige Betätigung eines Proportionalventils, wie z. B. eines elektropneumatischen Druckwandlers, zu ermöglichen.

An Verbrennungskraftmaschinen werden z. B. klappenförmig ausgebildete Luft- bzw. Abgasleitelemente für die Abgasrückführung und die Saugrohrverstellung, um zwei Beispiele zu nennen, eingesetzt sowie an Ladeeinrichtungen die Leitschaufeln durch Proportionalventile, wie z. B. elektropneumatische Druckwandler, mit einer federbelastetenUnterdruckdose angesteuert. Es besteht die Entwicklungstendenz, die eingesetzten Proportionalventile zunehmend unmittelbar an den Verbrennungskraftmaschinen anzubauen statt wie bisher an der Karosserie. Der Grund hierfür liegt darin, dass zunehmend fertigmontierte und geprüfte Motoren an die Endmontage geliefert werden und zum Teil komplett montierte Verbrennungskraftmaschinen an Automobilhersteller verschickt werden. Erfolgt der Anschluss der Verbrennungskraftmaschine an die dieser jeweils zugewiesenen elektropneumatischen Wandler in der Endmontage, kann bei sich dann einstellenden Problemen die Fehlerursache nicht eindeutig ermittelt werden. Ferner wird durch die Montage eines elektropneumatischen Wandlers an der Verbrennungskraftmaschine der elektropneumatische Druckwandler höher belastet. Einerseits steigt das Temperaturniveau, welchem ein elektropneumatischer Druckwandler dann ausgesetzt ist, von etwa 130°C auf in der Spitze etwa 160°C, andererseits treten von 3g auf 40g gesteigerte Beschleunigungswerte auf, welchen der an der Verbrennungskraftmaschine montierte elektropneumatische Druckwandler nunmehr ausgesetzt ist. Um den Steller des elektropneumatischen Druckwandlers in seiner korrekten Regellage zu halten, werden hochgenau gefertigte Führungen eingesetzt, welche eine spezielle Gleitbesehichtung mit einem Anteil von PTFE aufweisen können. Die ergriffenen Maßnahmen führen einerseits zu deutlich höheren Herstellkosten und können die erhöhten Anforderungen, die beim Anbau eines elektropneumatischen Druckwandlers an der Verbrennungskraftmaschine gefordert werden, nur unzureichenderfüllen.

Aus der EP 0 898 102 A2 ist ein fluidbetätigter Arbeitszylinder bekannt, der einen verschiebbaren Kolben und mehrere Kammern, ringförmige Ventile und ein Gehäuse umfasst. Das Gehäuse umfasst ein rohrförmiges Gehäuseteil, dessen Abschlusswände von Abschlussdeckeln gebildet werden. Die Abschussdeckel umfassen ringförmige Deckelteile, die in das rohrförmige Gehäuseteil hineinragen. Die Kammern des Zylinders können über elektrmagnetisch ansteuerbare Ventile mit Druck beaufschlagt werden, wobei die jeweilige Kammer entweder mit einer Druckquelle oder mit einer Drucksenke verbunden ist.

### Darstellung der Erfindung

Der erfindungsgemäß vorgeschlagenen Lösung folgend, wird eine integrierte Druckwandler-Unterdruck-Stelleinheit vorgeschlagen, welche einen Druckwandler, wie z. B. einen elektropneumatischen Druckwandler, und einen Unterdrucksteller aufweist. Der Druckwandler und der Unterdrucksteller werden an einer Schnittstelle, welche eine Kammer des Unterdruckstellers mit einer mit unterschiedlichen Luftdruckniveaus beaufschtagbaren Kammer des Druckwandlers verbindet, miteinander montiert. Hierzu ist die Kammer des Druckwandlers und die erste Kammer des Unterdruckstellers über einen sich von der Kammer aus erstreckenden, in die erste Kammer des Unterdruckstellers mündenden Rohrabschnitt gekoppelt sind, wobei sich im Boden des Druckwandlers eine Öffnung zu dem Rohrabschnitt befindet und die Wand des Rohrabschnitts von einem Dichtungsabschnitt umschlossen ist, der eine Ausnehmung aufweist, in welcher ein Dichtelement eingelegt ist, das mit einer Begrenzungswand einer ersten Kammer des Unterdnickstellers zusammenwirkt. Der Druckwandler umfasst weiterhin einen mit einem Stellglied gekoppelten Dauermagneten, der mit einer weiteren Magnetspule zusammenwirkt, die ein der Stellposition des Stellgliedes entsprechendes Lagesignal erzeugt. Die erfindungsgemäß vorgeschlagene integrierte Dnickwandler-Unterdruck-Stelleinheit umfasst somit eine Lagerückmeldung, über welche der jeweilige Schaltzustand des Druckwandlers mit integriertem Unterdrucksteller jeweils an ein Motorsteuergerät, z. B. eine Verbrennungskraftmaschine, zurückgemeldet werden kann.

In dem Druckwandler kann zur Applikation der jeweiligen Druckniveaus, wie eines definierten Systemunterdrucks und der Atmosphärenluft, ein Doppelsitzventil eingesetzt werden. Darüber hinaus können auch zwei einzelne Ventile eingesetzt werden.

Aufgrund der erfindungsgemäß vorgeschlagenen Lösung werden andernfalls erforderliche Montageschritte beim Automobilhersteller eingespart, da aufgrund der bisher bekannten technischen Lösungen ein Druckwandler, wie z. B. ein elektropneumatischer Druckwandler, mit einem Unterdrucksteller separat gefügt werden muss. Der dazu erforderliche Montageschritt kann aufgrund der erfindungsgemäß vorgeschlagenen Lösung nunmehr eingespart werden, ebenso wie die zum Fügen des Druckwandlers mit dem Unterdrucksteller erforderlichen Verschraubungen. In vorteilhafter Weise kann die Schnittstelle zwischen dem Druckwandler, wie z. B. einem elektropneumatischen Druckwandler, und dem Unterdrucksteller durch eine kunststoffgerecht herstellbare, günstige Montageform, wie z. B. eine Schnappverbindung, ausgebildet werden.

Eine ansonsten im Montagebereich des Druckwandlers, wie z. B. eines elektropneumatischen Druckwandlers, vorzuhaltende Trägerplatte kann entfallen, ferner wird durch die vorgeschlagene Modulbauweise in der Endmontage beim Automobilhersteller in erheblichem Maße Prüfumfang eingespart. Aufgrund der kompakten Bauweise des erfindungsgemäß vorgeschlagenen Druckwandlers mit integriertem Unterdrucksteller wird Bauraum an der Verbrennungskraftmaschine eingespart. Eine weitere vorteilhafte Eigenschaft des erfindungsgemäß vorgeschlagenen integrierten Druckwandlers mit Unterdrucksteller ist eine integrierte Lagerückmeldung. Dazu können eine Magnetspule sowie ein Dauermagnet eingesetzt werden, der mit dem Verstellglied der integrierten Druckwandler-Unterdruck-Stelleinheit verbunden ist. In vorteilhafter Weise können die Kontaktfahnen, mit welchen die im Druckwandler der integrierten Druckwandler-Unterdruck-Stelleinheit eingebauten Magnetspulen angesteuert werden, an der Oberseite der integrierten Druckwandler-Unterdruck-Stelleinheit vorgesehen werden. Somit lassen sich die Signale der Lagerückmeldung sowie die Ansteuerungssignale an einer Seite der integrierten Druckwandler-Unterdruck-Stelleinheit unterbringen, was Vorteile hinsichtlich der Verkabelung bringt.

### Zeichnung

Anhand der Zeichnung wird die Erfindung nachstehend eingehender beschrieben.

Die einzige Figur zeigt einen Schnitt durch die erfindungsgemäß vorgeschlagene integrierte Druckwandler-Unterdruck-Stelleinheit mit Schnittstelle.

### Ausführungsbeispiel

Eine integrierte Druckwandler-Unterdruck-Stelleinheit 14 umfasst einen Druckwandler 10, welcher bevorzugt als elektropneumatischer Wandler ausgestaltet ist, sowie einen Unterdrucksteller 12.

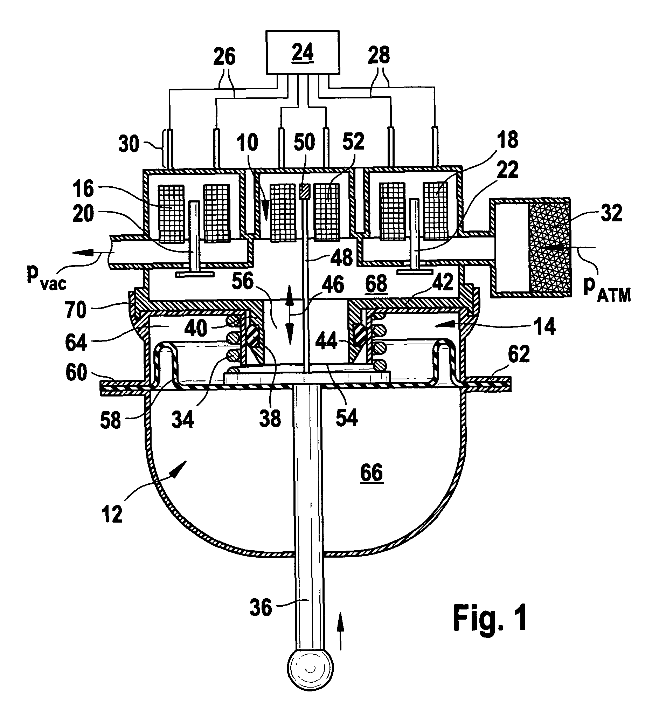

Der Druckwandler 10, bei dem es sich bevorzugt um einen elektropneumatischen Druckwandler handelt, und der Unterdrucksteller 12 stellen im montierten Zustand ein Bauteil dar. Im Druckwandler 10 sind eine erste Magnetspule 16 und eine zweite Magnetspule 18 sowie eine weitere Magnetspule 52 angeordnet. Mittels der ersten Magnetspule 16 wird ein Unterdruckventil 20, mittels der zweiten Magnetspule 18 ein Atmosphärenluftventil 22 betätigt. In der Darstellung gemäß Figur 1 sind das Unterdruckventil 20, welches mit einem Unterdruckanschluss p_{vac} verbunden ist, und das Atmosphärenluftventil 22, welches stromab eines Luftfilters 32 angeordnet ist, als Einzelventile ausgeführt. Die erste Magnetspule 16 steht über erste Ansteuerleitungen 26, die zweite Magnetspule 18 über zweite Ansteuerleitungen 28 mit einem Steuergerät 24 in Verbindung. Oberhalb der Magnetspulen 16, 18 und 52 befindet sich eine Kontaktleiste 30, an der die Ansteuerleitungen 26, 28 für die erste Magnetspule 16 und die zweite Magnetspule 18 angeschlossen sind und die elektrischen Signale von der weiteren Magnetspule 52 zur Übertragung an das Steuergerät 24 abgegriffen werden.

Im Boden 42 des Druckwandlers 10 befindet sich eine Öffnung zu einem Rohrabschnitt 56. Die Wand des Rohrabschnittes 56 ist von einem Dichtungsabschnitt 40 umschlossen, der eine Ausnehmung 44 aufweist, in welche ein z. B. als O-Ring beschaffenes Dichtelement 38 eingelegt ist. Der Dichtungsabschnitt 40 bzw. das als O-Ring ausgestaltete Dichtelement 38 wirken mit einer Begrenzungswand einer ersten Kammer 64 des Unterdruckstellers 12 zusammen. Die Begrenzungswand der ersten Kammer 64 des Unterdruckstellers 12 fungiert gleichzeitig als Führungsfläche für ein Federelement 34, welches sich an einer oberen Begrenzungswand der ersten Kammer 64 des Unterdruckstellers 12 als auch an einem tellerförmigen Ansatz eines Stellgliedes 36 abstützt. Das Stellglied 36 umfasst einen Stößel 48, an dessen in die weitere Magnetspule 52 hineinragendem Ende ein Dauermagnet 50 aufgenommen ist. Die in vertikale Richtung verlaufende Hubbewegung des Stößels 48 und des Stellgliedes 36 ist durch einen Doppelpfeil 46 angedeutet.

Der Rohrabschnitt 56 im Boden 42 des Druckwandlers 10 stellt eine Schnittstelle 54 zwischen dem Druckwandler 10, bei dem es sich bevorzugt um einen elektropneumatischen Wandler handelt, und dem Unterdrucksteller 12 dar. Über den Rohrabschnitt 56 kann die erste Kammer 64 des Unterdruckstellers 12 je nachdem, welcher Druck in einer Kammer 68 des Druckwandlers 10 herrscht, entweder mit einem Unterdruckniveau p_{vac} oder einem Umgebungsdruckniveau p_{ATM} beaufschlagt werden. Die erste Kammer 64 des Unterdruckstellers 12 ist über eine Membran 58 von einer zweiten Kammer 66 des Unterdruckstellers 12 getrennt. Die zweite Kammer 66 des Unterdruckstellers 12 wird vom Stellglied 36 durchsetzt, welches sich sowohl in vertikaler Richtung nach oben als auch in vertikaler Richtung nach unten entsprechend des sich in der Kammer 68 einstellenden Druckes bewegt.

Die Membran 58 ist an einer ersten Einspannstelle 60 sowie an einer zweiten Einspannstelle 62 in das bevorzugt als Kunststoffspritzgießbauteil gefertigte Gehäuse des Unterdruckstellers 12 eingespannt. Die Membran 58, die sich zwischen der ersten Einspannstelle 60 und der zweiten Einspannstelle 62 erstreckt, weist eine wulstförmige Faltung auf, die eine Auslenkung der Membran 58 ermöglicht. Darüber hinaus ist die Membran 58 mit dem tellerförmigen Ansatz zwischen dem Stellglied 36 und dem Stößel 48, der in die Kammer 68 des Druckwandlers 10 hineinragt, verbunden. Die dargestellte integrierte Druckwandler-Unterdruck-Stelleinheit 14 wird bevorzugt als Kunststoffspritzgießbauteil gefertigt. Im Wege des Kunststoffspritzgießens lassen sich sowohl am Gehäuse des Druckwandlers 10, bei dem es sich bevorzugt um einen elektropneumatischen Wandler handelt, als auch am Gehäuse des Unterdruckstellers 12 Schnappverschlüsse 70 anspritzen, die im dargestellten montierten Zustand der integrierten Druckwandler-Unterdruck-Stelleinheit 14 in ihrer Schließposition dargestellt sind. Im in Figur 1 dargestellten Zustand sind das Gehäuse des Druckwandlers 10 und das Gehäuse des Unterdruckstellers 12 durch die ineinander einrastenden Teile des Schnappverschlusses 70 formschlüssig miteinander verbunden.

Wird bei der in der Zeichnung dargestellten integrierten Druckwandler-Unterdruck-Stelleinheit 14 über das Steuergerät 24 und die ersten Ansteuerleitungen 26 das Unterdruckventil 20 geschaltet, fährt dessen tassenförmig ausgebildeter Stößel aus seiner Schließstellung aus und gibt die Verbindung zwischen dem Unterdruckniveau p_{vac} und der Kammer 68 des Druckwandlers 10 frei. Dadurch herrscht im Rohrabschnitt 56 ein Unterdruck, so dass der tellerförmige Ansatz mit daran befestigtem Stellglied 36 entgegen der Wirkung des Federelementes 34 ausgelenkt wirkt und der Stößel 48 mit daran aufgenommenem Dauermagneten 50 in die weitere Magnetspule 52 einfährt. Demzufolge führt das Stellglied 36 entsprechend des Doppelpfeiles 46 eine Hubbewegung nach oben aus.

Bei dem Hineinbewegen des am Stößel 48 aufgenommenen Dauermagneten 50 in die weitere Magnetspule 52 wird das Lagesignal an das Steuergerät 24 übermittelt, so dass die Position des Stellgliedes 36 der integrierten Druckwandler-Unterdruck-Stelleinheit 14 bekannt ist.

Wird die Bestromung der ersten Magnetspule 16 aufgehoben, wird die Verbindung zwischen der Kammer 68 des Druckwandlers 10 und dem Unterdruckniveau p_{vac} unterbrochen und die zweite Magnetspule 18 über die zweiten Ansteuerleitungen 28 durch das Steuergerät 24 angesteuert. Über den Luftfilter 32 angesaugte Atmosphärenluft strömt über das geöffnete Atmosphärenluftventil 22 in die Kammer 68 des Druckwandlers 10 ein. Die Atmosphärenluft strömt über die Öffnung 56 auf den tellerförmigen Ansatz des Stellgliedes 36 und drückt diesen und demzufolge das daran befestigte, stangenförmig ausgebildete Stellglied 36 in vertikale Richtung nach unten. Bei diesem Auslenkvorgang wird die Membran 58 aus ihrer in Figur 1 dargestellten Position weiter nach unten ausgelenkt, bis das Stellglied 36 seinen Stellweg - unterstützt durch die Wirkung des Federelementes 34 - nach unten ausgeführt hat. Bei der in vertikale Richtung nach unten gerichteten Bewegung des Stellgliedes 36 durch Einwirkung des Atmosphärendruckes beim Verbinden der Kammer 68 des Druckwandlers 10 mit dem Atmosphärendruckniveau p_{ATM}, fährt der Stößel 48 mit daran aufgenommenem Dauermagneten 50 wieder in die Kammer 68 ein, so dass sich die Relativposition des Dauermagneten 50 in Bezug auf die weitere Magnetspule 52 im oberen Bereich des Druckwandlers 10 ändert. Auch das bei dieser Bewegung entstehende elektrische Lagesignal wird über die Signalleitungen zwischen der weiteren Magnetspule 52 und dem Steuergerät 24 an das letztgenannte übermittelt.

In der Darstellung gemäß Figur 1 ist der Schnappverschluss 70 zwischen dem Gehäuse des Druckwandlers 10 und des Unterdruckstellers 12 der integrierten Druckwandler-Unterdruck-Stelleinheit 14 als Schnappverbindung ausgebildet. Alternativ zur in Figur 1 dargestellten formschlüssigen Verbindung zwischen dem Gehäuse des Druckwandlers 10 und dem Unterdrucksteller 12 der integrierten Druckwandler-Unterdruck-Stelleinheit 14 könnte auch ein Schraubgewinde an den entsprechenden einander gegenüberliegenden Gehäusebereichen des Druckwandlers 10 und des Unterdruckstellers 12 ausgeführt werden.

In Figur 1 ist eine induktive Lagerückmeldung unter Einsatz des Dauermagneten 50 und der weiteren Magnetspule 52 dargestellt. Anstelle der induktiven Lagerückmeldung kann diese auch auf kapazitivem Wege erfolgen. Die Lagerückmeldung kann - wie in der Figur dargestellt - direkt über die weitere Magnetspule 52 und den in diese einfahrenden Dauermagneten 50 erfolgen; daneben ist es möglich, über Messgrößen, wie z. B. dem Ladedruck einer Aufladeeinrichtung im Abgastrakt von Verbrennungskraftmaschinen, die externe Messgröße der Lagerückmeldung heranzuziehen. Die Messgröße wird dann im Steuergerät 24 mit dem Sollwert abgeglichen und gegebenenfalls über die Steuerung des Druckwandlers 10 der integrierten Druckwandler-Unterdruck-Stelleinheit 14 eingestellt.

## Patentansprüche

1. Integrierte Druckwandler-Unterdruck-Stelleinheit (14) mit einem Druckwandler (10) mit einer Kammer (68), die mit einem Unterdruckniveau (p_{vac}) und dem Atmosphärendruckniveau (p_{ATM}) verbindbar ist, und einem Unterdrucksteller (12), der zumindest eine erste Kammer (64) aufweist, **dadurch gekennzeichnet, dass** die Kammer (68) des Druckwandlers (10) und die erste Kammer (64) des Unterdruckstellers (12) über einen sich von der Kammer (68) aus erstreckenden, in die erste Kammer (64) des Unterdruckstellers (12) mündenden Rohrabschnitt (56) gekoppelt sind, wobei sich im Boden des Druckwandlers eine Öffnung zu dem Rohrabschnitt (56) befindet und die Wand des Rohrabschnitts (56) von einem Dichtungsabschnitt (40) umschlossen ist, der eine Ausnehmung (44) aufweist, in welcher ein Dichtelement (38) eingelegt ist, das mit einer Begrenzungswand einer ersten Kammer (64) des Unterdruckstellers (12) zusammenwirkt, und dass der Druckwandler (10) einen mit einem Stellglied (36) gekoppelten Dauermagneten (50) umfasst, der mit einer weiteren Magnetspule (52) zusammenwirkt, die ein der Stellposition des Stellgliedes (36) entsprechendes Lagesignal erzeugt.

2. Integrierte Druckwandler-Unterdruck-Stelleinheit gemäß Anspruch 1, **dadurch gekennzeichnet, dass** der Druckwandler (10) eine ein Unterdruckventil (20) betätigende erste Magnetspule (16) und eine ein Atmosphärenluftventil (22) betätigende zweite Magnetspule (18) umfasst.

3. Integrierte Druckwandler-Unterdruck-Stelleinheit gemäß Anspruch 1, **dadurch gekennzeichnet, dass** der Unterdrucksteller (12) eine die erste Kammer (64) von einer zweiten Kammer (66) trennende Membran (58) aufweist, die mit einem tellerförmigen, federbeaufschlagten Ansatz des Stellgliedes (36) verbunden ist.

4. Integrierte Druckwandler-Unterdruck-Stelleinheit gemäß Anspruch 1, **dadurch gekennzeichnet, dass** das Gehäuse des Druckwandlers (10) und das des Unterdruckstellers (12) mittels einer formschlüssigen Verbindung (70) miteinander gekoppelt sind.

5. Integrierte Druckwandler-Unterdruck-Stelleinheit gemäß Anspruch 1, **dadurch gekennzeichnet, dass** der Rohrabschnitt (56) im Boden (42) des Druckwandlers (10) in einem Gehäuseteil der ersten Kammer (64) des Unterdruckstellers (12) geführt ist.

6. Integrierte Druckwandler-Unterdruck-Stelleinheit gemäß Anspruch 5, **dadurch gekennzeichnet, dass** die Gehäuse des Druckwandlers (10) und des Unterdruckstellers (12) als Kunststoffspritzgussteile ausgeführt sind.

7. Verwendung der integrierten Druckwandler-Unterdruck-Stelleinheit gemäß der Ansprüche 1 bis 6 zur Verstellung von Leitelementen in Abgasrückführsystemen, im Ansaugtrakt oder zur Verstellung von Leitschaufeln an Aufladeeinrichtungen von Verbrennungskraftmaschinen.

## Claims

1. Integrated pressure-transducer/vacuum-actuator unit (14) with a pressure transducer (10) having a chamber (68) which is connectable to a vacuum level (p_{vac}) and to the atmospheric pressure level (p_{ATM}), and with a vacuum actuator (12) which has at least one first chamber (64), **characterized in that** the chamber (68) of the pressure transducer (10) and the first chamber (64) of the vacuum actuator (12) are coupled via a pipe section (56) extending from the chamber (68) and issuing into the first chamber (64) of the vacuum actuator (12), an orifice to the pipe section (56) being located in the bottom of the pressure transducer, and the wall of the pipe section (56) being surrounded by a sealing section (40) having a recess (44) into which is inserted a sealing element (38) which cooperates with a boundary wall of a first chamber (64) of the vacuum actuator (12), and **in that** the pressure transducer (10) comprises a permanent magnet (50) which is coupled to an actuating member (36) and which cooperates with a further magnet coil (52) which generates the position signal corresponding to the actuation position of the actuating member (36).

2. Integrated pressure-transducer/vacuum-actuator unit according to Claim 1, **characterized in that** the pressure transducer (10) comprises a first magnet coil (16) operating a vacuum valve (20) and a second magnet coil (18) operating an atmospheric air valve (22).

3. Integrated pressure-transducer/vacuum-actuator unit according to Claim 1, **characterized in that** the vacuum actuator (12) has a diaphragm (58) which separates the first chamber (64) from a second chamber (66) and which is connected to a plate-shaped springloaded extension of the actuating member (36).

4. Integrated pressure-transducer/vacuum-actuator unit according to Claim 1, **characterized in that** the housing of the pressure transducer (10) and that of the vacuum actuator (12) are coupled to one another by means of a positive connection (70).

5. Integrated pressure-transducer/vacuum-actuator unit according to Claim 1, **characterized in that** the pipe section (56) is guided in the bottom (42) of the pressure transducer (10) in a housing part of the first chamber (64) of the vacuum actuator (12).

6. Integrated pressure-transducer/vacuum-actuator unit according to Claim 5, **characterized in that** the housings of the pressure transducer (10) and of the vacuum actuator (12) are formed as plastic injection mouldings.

7. Use of the integrated pressure-transducer/vacuum-actuator unit according to Claims 1 to 6 for the adjustment of guide elements in exhaust gas recirculation systems in the intake tract or for the adjustment of guide vanes in supercharging devices of internal combustion engines.

## Revendications

1. Unité d'actionneur à dépression avec capteur de pression intégré (14), comprenant un capteur de pression (10) doté d'une chambre (68) qui peut être reliée à un niveau de dépression (p_{vac}) et au niveau de la pression atmosphérique (P_{ATM}), et comprenant un actionneur à dépression (12) qui comprend au moins une première chambre (64), **caractérisée en ce que** la chambre (68) du capteur de pression (10) et la première chambre (64) de l'actionneur à dépression (12) sont accouplées par l'intermédiaire d'une section tubulaire (56) s'étendant à partir de la chambre (68) et débouchant dans la première chambre (64) de l'actionneur à dépression (12), une ouverture vers la section tubulaire (56) se situant dans le fond du capteur de pression, et la paroi de la section tubulaire (56) étant entourée par une section d'étanchéité (40) qui comprend un évidement (44) dans lequel un élément d'étanchéité (38) est inséré, lequel élément d'étanchéité coopère avec une paroi de délimitation d'une première chambre (64) de l'actionneur à dépression (12), et **en ce que** le capteur de pression (10) comporte un aimant permanent (50) accouplé à un actionneur (36), lequel aimant permanent coopère avec une autre bobine magnétique (52) qui génère un signal de position correspondant à la position d'actionnement de l'actionneur (36).

2. Unité d'actionneur à dépression avec capteur de pression intégré selon la revendication 1, **caractérisée en ce que** le capteur de pression (10) comporte une première bobine magnétique (16) actionnant une soupape de dépression (20) et une deuxième bobine magnétique (18) actionnant une soupape d'air atmosphérique (22).

3. Unité d'actionneur à dépression avec capteur de pression intégré selon la revendication 1, **caractérisée en ce que** l'actionneur à dépression (12) comprend une membrane (58) séparant la première chambre (64) d'une deuxième chambre (66), laquelle membrane est reliée à un épaulement de l'actionneur (36) en forme de disque et sollicité par un ressort.

4. Unité d'actionneur à dépression avec capteur de pression intégré selon la revendication 1, **caractérisée en ce que** le boîtier du capteur de pression (10) et celui de l'actionneur à dépression (12) sont accouplés l'un à l'autre au moyen d'une liaison par coopération de formes (70).

5. Unité d'actionneur à dépression avec capteur de pression intégré selon la revendication 1, **caractérisée en ce que** la section tubulaire (56) dans le fond (42) du capteur de pression (10) est guidée dans une partie de boîtier de la première chambre (64) de l'actionneur à dépression (12).

6. Unité d'actionneur à dépression avec capteur de pression intégré selon la revendication 5, **caractérisée en ce que** les boîtiers du capteur de pression (10) et de l'actionneur à dépression (12) sont réalisés en tant que pièces moulées par injection de plastique.

7. Utilisation de l'unité d'actionneur à dépression avec capteur de pression intégré selon les revendications 1 à 6 pour le réglage d'éléments de guidage dans des systèmes de recirculation des gaz d'échappement, dans le système d'admission ou pour le réglage d'aubes directrices sur des dispositifs de suralimentation de moteurs à combustion interne.
